# EUROPEAN PATENT APPLICATION

(11) **EP 2 017 785 A1**
(43) Date of publication of application: **21.01.2009**
(21) Application number: 07112645.2
(22) Date of filing: 17.07.2007
(51) Int. Cl.: G06T 7/00

(54) **Imaging method for motion analysis**

(71) Applicant: BrainLAB AG, 85622 Feldkirchen (DE); AO Technology AG, 7000 Chur (CH)
(72) Inventor: Feilkas, Thomas, 85567 Grafing (DE); Brundobler, Matthias, 80337 Munich (DE); Ferguson, Stephen J., 3251 Ruppoldsried (CH); Thistlethwaite, Paul, 3008 Bern (CH)
(74) Representative: Schwabe - Sandmair - Marx

(57) **Abstract**

The invention concerns a method to determine the motion or relative position or deformation of an object or of at least two elements (1, 2) comprising the steps of: a) obtaining three-dimensional data of an object or elements (1, 2) in a first shape or first absolute or relative position; b) moving at least one of the elements (1, 2) and/or deforming the object to have a second shape or second absolute or relative position ; c) obtaining two-dimensional data of the object or elements (1, 2) having the second shape or second absolute or relative position; and d) calculating the three-dimensional second shape or second absolute or relative position using the two-dimensional data obtained in step c) and the three-dimensional data obtained in step a).

## Description

The present invention relates to a method and an apparatus for imaging one or more objects or elements which can be deformed, such as an organ, to determine the deformation or to determine the relative position or motion of two or more elements probably being present in an object after the object and/or the elements have moved. Preferably the invention relates to the determination of the movement or relative position of vertebrae (being elements) before and after a person has moved or altered the shape or position of the spine (being an object).

Spinal surgery is a way to treat low back pain. However, treatment planning for spinal surgery requires a clear understanding of the causes of low back pain. Research has shown that there is a link between abnormal patterns of spinal motion and chronic back pain.

Previous attempts at quantifying spinal kinematics in vivo have either required a surgical intervention to place rigid tracking pins percutaneously into each vertebra, or have been limited to sagittal plane radiographs evaluated at only discrete points in the flexion-extension cycle. For the development of a practical diagnostic tool, the requirement of even minor surgical intervention to obtain accurate three-dimensional kinematic measurements is desired.

Methods based on two-dimensional imaging with conventional radiographic techniques do not provide adequate information about the motion patterns of the spine in order to identify appropriate candidates for treatment or to conduct meaningful follow-up evaluation. Furthermore, techniques which provide only discrete snapshots of spinal motion may not capture the specific motion event responsible for pain.

US 6,418,183 B1 relates to two-pass CT imaging, wherein a volume of a patient is scanned with a first, full field-of-view scan to acquire first projection data; a smaller volume of the patient is scanned with a second, restricted field-of-view scan to acquire second projection data, an amount of shift between the first projection data and the second projection data resulting from patient movement is estimated; and the first projection data is blended with the second projection data in accordance with the estimated amount of shift to estimate projections of the second scan.

US 6,556,008 B2 and corresponding DE 100 29 585 A1 relate to a method for the operation of a magnetic resonance apparatus, wherein in a first examination of an examination subject, a first scout dataset of the examination subject is produced and with reference to which at least one first slice of an examination subject to be imaged is determined. A further scout dataset of the examination subject is produced in at least one further examination of the examination subject temporally following the first examination. A change in position between the first and the further scout dataset is identified, and at least one further slice of the examination subject to be imaged is defined according to the identified positional change, this at least one further slice exhibiting an identical positioning within the examination subject with respect to the first slice.

It is an object of the present invention to provide a method and an apparatus to generate data defining the motion or deformation of an object, such as an organ or spine, or elements, such as vertebrae in an efficient way, which data can e.g. be used for motion analysis.

This object is solved by the method and apparatus as defined in the independent claims. Preferred embodiments are defined in the dependent claims.

According to a first aspect, the present invention relates to a method to determine the motion or relative position or deformation of an object, such as an organ, or of at least two elements, such as vertebrae, to obtain data which can for example be used for motion or kinematic analysis for treatment planning, wherein in a first step three-dimensional data of an object or of at least two elements, such as two vertebrae, which can be moved with respect to each other, is obtained in a first position. In general, kinematic analysis of spinal motions needs at least one three-dimensional or CT-scan for each movement position to enable the visualisation of motion patterns in three dimensions. At present, three-dimensional motion data of a patient is mostly acquired using functional MR or fast CT-data acquisition. According to the invention it is sufficient to provide only a single set of three dimensional (imaging) data. The three-dimensional data in this first position can be obtained by any appropriate imaging modality, such as for example a computer tomography (CT)-scan, magnetic resonance imaging (MRI), ultrasound. In a subsequent step, the object, such as e.g. the spine, is deformed and/or the at least two elements, such as the vertebrae, are moved with respect to each other, for example by changing the position of the patient to a second position after the three-dimensional data is obtained. The object and/or elements are then imaged or scanned while being in the altered or changed position to obtain two-dimensional imaging data of the object or elements in this second position. Using this two-dimensional data of the object or elements and the previously obtained information from the three-dimensional data of the object or elements being in the first position, the three-dimensional position or form of the object and/or elements in the second position can be calculated or reconstructed to determine the deformation of the object and/or the relative movement or motion of the at least two elements when comparing the reconstructed or calculated three-dimensional data with the previously acquired three-dimensional data of the second position of the object and/or elements in the first position.

Since the shape or positions of the object or elements in the second position can be reconstructed using the two-dimensional imaging data obtained e.g. from a scout-view of a CT scanner, the amount of radiation and the time needed can be reduced compared to a method employing two full three-dimensional imaging data sets to perform a motion analysis by comparing these data sets.

Thus, the inventive method provides a way to reconstruct different or changed positions of an object or element, such as the spine or other anatomical objects, such as bones, organs or tumors, while using only a single (full) three-dimensional (CT) scan, leading to a minimal amount of radiation. The second set of three-dimensional data can be reconstructed using the first set of three-dimensional data, which is preferably segmented using known methods to define the boundaries of elements or objects within the data set and/or from two dimensional data, such as one or more projection images or scout-images after movement of the object or elements. The two-dimensional imaging modality can also be dynamic fluoroscopy.

The three-dimensional data is preferably segmented into the objects of interest which may be bones, organs or tumours. The segmented objects can be registered to the two-dimensional image or scan to determine the three-dimensional position or shape to reconstruct a second three-dimensional data set using less radiation. The segmentation of the data set can be performed automatically. The positions of anatomical landmarks, such as the pedicle entry point, the planning of the position and/or shape of screws, discs and rods can be compared and lead to conclusions e.g. for or against certain surgical treatment such as artificial disc or fusion surgery.

According to a second aspect, which uses the principles set forth above, the two-dimensional data is obtained before altering or moving the object or elements, i.e, in the first position, wherein the three-dimensional data is obtained thereafter, i.e. in the second position. As described above, the three-dimensional data to define the shape and/or absolute or relative position(s) of the object or elements in the first position before moving or alterating the object or elements can be reconstructed using the preferably segmented three-dimensional imaging data obtained in the second position. The comparison of the acquired three-dimensional imaging data with the reconstructed three-dimensional imaging data can then be performed as set forth above.

It is noted that three-dimensional imaging data can be used which has been acquired for example within the same imaging apparatus providing also the two-dimensional imaging data, such as a CT-scanner providing the three-dimensional data and one or more two-dimensional scout views. However, it is also possible that already existing three-dimensional or two-dimensional imaging data is used, since e.g. most patients having a history of chronic back pain already have completed at least one imaging session. This further reduces the time and costs involved and can reduce exposure to radiation.

According to the invention, it is no longer necessary to generate a second three-dimensional data set once a three-dimensional data set is available. The second three-dimensional data set used to compare with the available three-dimensional data set can be reconstructed using the available and preferably segmented three-dimensional data set and an additional two-dimensional data set, such as projection images or scout-view images.

The present invention provides the information about the deformation or movement of objects or elements using only a single CT-scan or any other three-dimensional imaging modality in combination with at least one additional two-dimensional or scout-view image or scan preferably for each sample of the patient movement. The three-dimensional data can be reconstructed corresponding to the patient movement.

Thus, a non-invasive method can be provided which allows the measurement of the three-dimensional dynamic motion of deformation or pathological patterns of an object, such as the human spine.

The inventive method can provide data for patient diagnosis, screening and follow-up analysis and examination and can also provide the basis for spine surgery planning software in the areas of e.g. disc prosthesis, dynamic stabilisation, facet joint reconstruction etc. while reducing the time and radiation needed to acquire the respective data.

The data provided by the described methods can for example be used for a preoperative and/or intraoperative planning to find for example the most suitable:
- length of a rod to be inserted between two vertebrae, especially when flexible rods are used
- height and/or size of an artificial disc
- center of rotation for artificial disc placement, especially if more than one level surgery is performed
- Interspinous Process Distraction System

Furthermore, the data can be used for:
- Decision making for or against a certain surgery, e.g. after a trauma to a vertebra, a non fused vertebra can be detected
- Determine the morphology of the spine, for instance to find out the flexibility of the spine for patients having ankylosing spondylitis (Bechterew's disease)
- checking the range of motion and the movement and status of the facet joints.

The invention can especially be used to find out how many levels of the spine can be safely used for navigation. Sometimes only a single vertebra is registered and it is assumed that the neighbouring vertebrae do not show any relative movement. This can lead to inaccuracies. Using the invention, the flexibility of the patient's spine can be determined beforehand and can be used to determine whether or not another patient registration is necessary. For instance if the method determines that the relative movement between L4 and L5 is less than 1deg and 1mm but between L4 and L3 more that 4deg and 3mm, which would mean that navigation on L4 and L5 can be done safely by registering only one of those two vertebrae, but for L4 and L3 both of them should be registered.

An example workflow to find out which vertebral levels are safe to work on can be as follows:
1) Acquire Scout-View Image (Extension)
2) 3D Scan (Flexion)
3) Reconstruct 3D data for step 1)
4) Determine flexibility between vertebrae to show which levels are safe to work on

The result of treatment can inter-operatively be checked. For instance the correction of the spine for scoliosis is planned. In the operation before fusing the vertebrae, the actual positions and situation in the patient can be compared to the planning data by acquiring a scout view of the current situation. From this, the 3D positions of the single vertebrae can be reconstructed and these can be compared to the planned positions.

According to an embodiment, a flexible or deformable device can be used to change or alter the position of the patient or object, such as an inflatable cushion, which is placed below the patient, or any other device which can e.g. change the position or shape of the spine from extension to flexion or vice versa.

The invention also relates to a computer program, which, when loaded or running on a computer, performs or supports the method or steps as set forth above. Furthermore, the invention relates to a program storage medium or a computer program product comprising such a program.

According to a further aspect, the invention relates to an apparatus to determine the motion or relative position or deformation of an object or of at least two elements for generating data which can be used in motion analysis comprising: an apparatus for generating three-dimensional data of an object or elements, such as a CT-scanner, a MR-scanner, or data reading means to read previously recorded three-dimensional imaging data of an object or elements; and an apparatus for generating at least one two-dimensional image of the object or elements, such as a CT-scanner or MR-scanner having the possibility to generate scout-views, a C-arm or a reading means to read data of at least one previously recorded two-dimensional image. The apparatus for providing the three-dimensional data and the apparatus for providing the two-dimensional data are connected to a computer or processor capable to perform the above described method.

The invention is described with reference to an exemplary embodiment illustrated in the enclosed figures which show:
- Figure 1: two vertebrae with inserted screws in a first position;
- Figure 2: to vertebrae with inserted screws in a second position after movement of the patient;
- Figure 3: an exemplary CT-scanner;
- Figure 4: a block diagram of the CT-scanner shown in Figure 3;
- Figure 5: a flow diagram illustrating the inventive method;
- Figure 6: the extraction of two-dimensional vertebral outlines from dynamic video fluoroscopy sequences; and
- Figure 7: a measurement protocol.

An example application for the invention is the planning of flexible rods 5. The problem of the surgeon is to determine before the operation how long and what sort of flexibility these rods 5 have to have. This can be done using a single CT scan and one scout view of the patient, each of them showing different flexion of the spine.

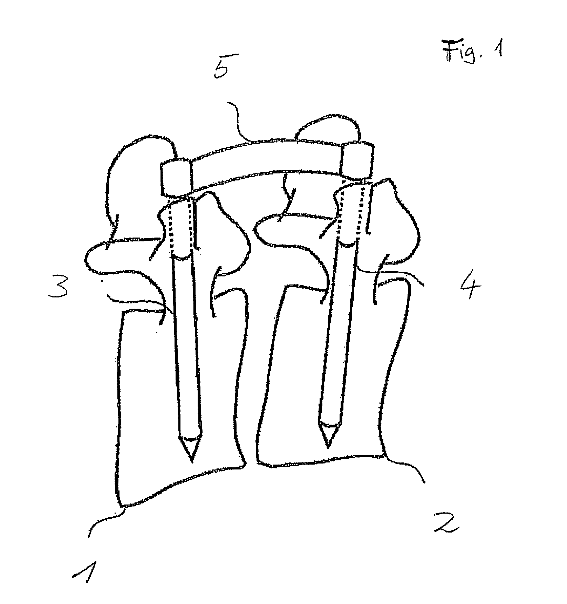

Figure 1 shows a 3D CT-scan showing screws 3 and 4 inserted into the vertebrae 1 and 2 representing an extension showing the minimum length, which screws 3 and 4 are needed to hold rods 5 in place. The length of the rods 5 for this first position (extension) is calculated.

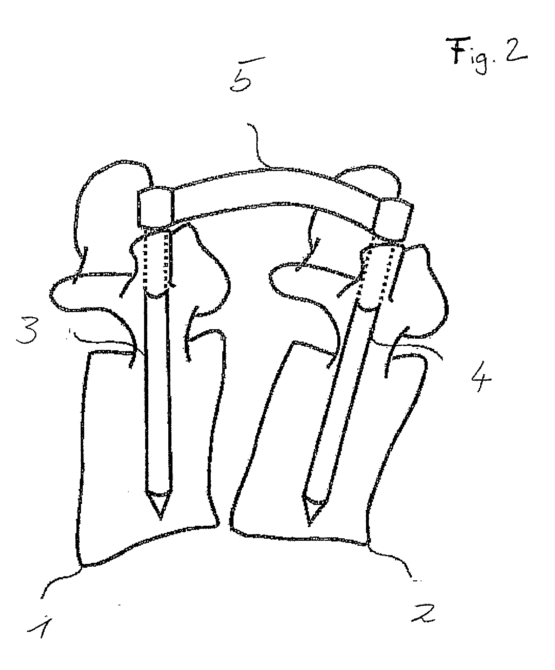

Figure 2 shows a reconstructed 3D image calculated from the CT-scan and one out of multiple scout views representing a state where the patient is in flexion to have e.g. the maximum length of the rod 5. The projection parameters of the scout view are preferably determined beforehand. There is no need for a camera or navigation system, since only the projection parameters of the scout view are of interest and it is not necessary to consider the position of the scanner.

Then the planned screws 3 and 4 of the first position shown in Figure 1 are copied into the reconstructed 3D image of Fig. 2 that shows the same patient in a different position and the length of the rods 5 is determined again.

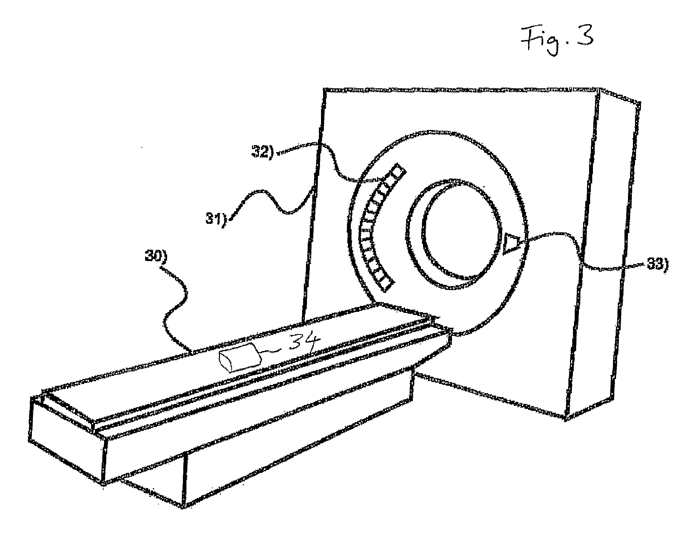

Figure 3 shows as an example for intra-operative imaging a CT scanner 31, where 33 is the radiation source and 32 is a row of detector elements. This scanner 31 can be replaced by any other imaging source, as for instance 3D-C-arms or MR. 30 is the table for the patient.

To easily determine different flexion positions of the spine, an inflatable cushion 34 can be placed underneath the patient lying on the table 30. A first scout view and a 3D scan can be done with the cushion 34 inflated. This can provide an overview with the spine in full flexion. The air of the cushion 34 can then be fully or partially removed, if several positions should be considered, and another scout view is acquired.

The next step is the transform action of the scan for the initial position into the new position. To do this, the objects of interest (vertebrae 1 and 2 in the example) in the 3D dataset are segmented. Each object 1 and 2 is then matched to the second scout view image(s) to determine the new position and rotation in 3D space.

The scout view is a projection image in case of a CT scanner. The difference to fluoroscopic images is the geometry of the image source. Fluoro images have one focus point, whereas the scout view in a CT scan has a focus line.

Preferably the projection parameters are determined to be able to correctly project the segmented vertebra into the image, A calibration phantom is provided that is scanned at least once using the scout view and optionally a 3D scan is taken to check if the projection parameters have been calculated correctly.

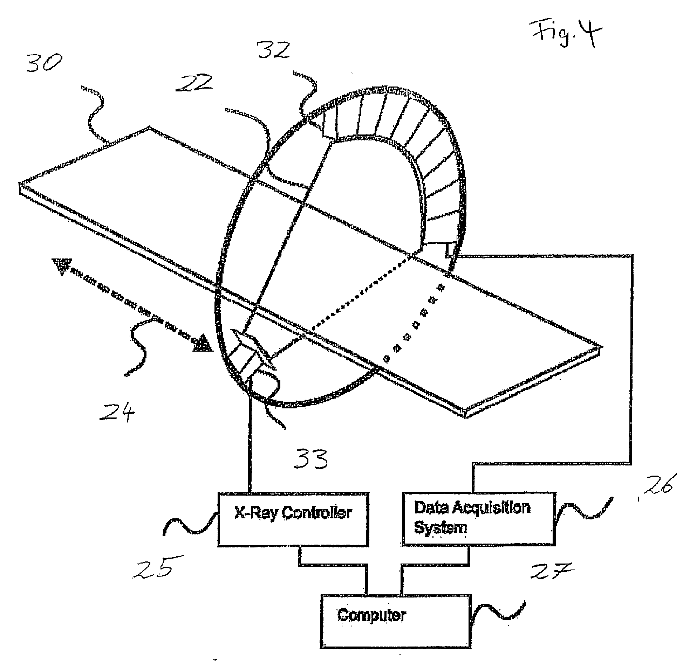

The setup for creating a scout view is as shown in Figure 4. The radiation source 33 being controlled by an x-ray controller 25 emits a beam of radiation 22 that is captured by the detector elements 32 which are connected to a data acquisition system 26. To acquire a scout view, the radiation source 33 is moved along the patient table 30 on an exemplary path shown as 24. The radiation source 33 is not rotated around the patient and the result is an overview of the patient using less radiation than necessary for a full scan. The controller 27 and the Data Acquisition system 26 are connected to a computer 27 being able to save all acquired 2D and 3D images.

After the projection parameters are known, the single vertebra of the 2D image is registered.

To reconstruct the 3D position of the segmented objetct(s) a database consisting of outlines for a set of expected rotations is created. For instance the possible range of motion for a vertebrae is within +/- 5 degrees, so a database is created that contains example contours for every 0.5 degree of rotation for all three axes.

The segmented vertebra is pre-positioned on the scout view using the initial position of the patient in the 3D scan. This provides a fairly close starting position for the search. The outline of the vertebra in the scout view is determined and a start search on the contour database for the 3D position and orientation producing the most similar contour is started.

The result is a transformation matrix that allows reconstructing a new 3D scan for the patient for all objects the matching process was performed. This allows to transform all the data associated with the vertebrae, e.g. planned screws, landmarks or other information, to the new scan and to determine the differences to the original 3D scan without having to perform a second one. Note that the acquisition of the scout view images can be moved to the beginning of the flow diagram and the reconstruction would then be done when the 3D data is available.

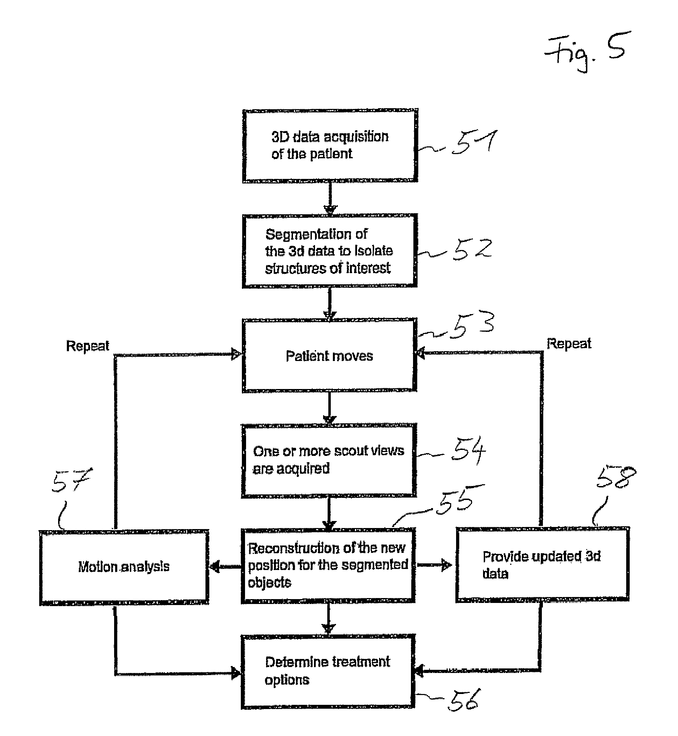

Figure 5 shows a flow diagram illustrating the inventive method.

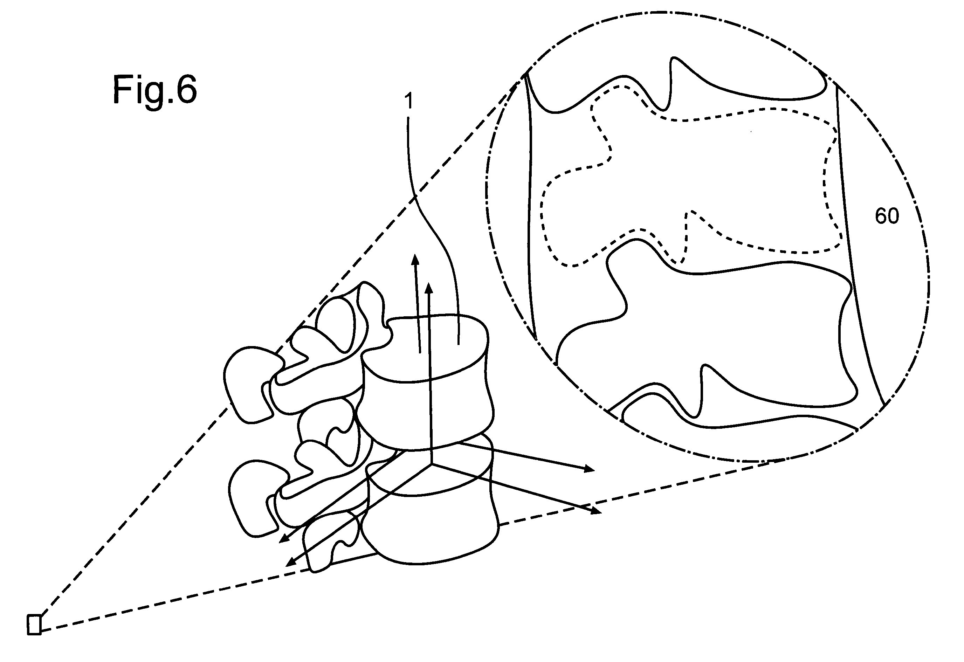

In a first step 51, a single three-dimensional scan of an object, such as the spine of a patient, can be obtained, for example by conventional CT or with ISO-C fluoroscopy. This three-dimensional data of the object, such as the spine of a patient, can be used to generate a "pose library" containing virtual templates of outlines of the scanned objects, such as the vertebrae. Pattern matching of the two-dimensional outlines of the individual vertebrae 1, obtained from single video fluoroscopy frames 60, as shown in Fig. 6, to the virtual templates of the vertebral outlines can be performed.

In the subsequent kinematic examination, the position of the patient can be changed several times, as represented by step 53. For example, patients can be instructed to complete a predefined series of motions within the imaging volume of a conventional C-arm, which can capture the motion sequence at step 54 for examples at rates of at least ten frames/second. It is also possible to enhance the examination protocol, for example by requesting that the patient will press a button when he experiences pain to allow synchronisation of the pain symptoms with specific frames in the video fluoroscopy sequence.

The first step in data processing is the semi-automatic segmentation of the three-dimensional CT or ISO-C dataset in step 52, which can also be performed after acquiring scout views. Vertebral bodies and other anatomical structures of interest can include bifurcations and regions of overlap between two adjacent bodies, so that a simple thresholding method can be used but may not be adequate to allow the isolation of each individual body. Following the segmentation of each vertebral body, a library of "virtual projections" is created for each body. Starting from a reference position and orientation, the two-dimensional projection of the three-dimensional body is calculated for every possible rotation about the three axes of motion. To reduce the quantity of data required for storing this library of projections, and to facilitate subsequent kinematic analyses, each profile can be converted from a Cartesian representation into a shape description in polar coordinate representation.

The next step in data processing is the segmentation of individual vertebrae from each frame of the video fluoroscopic data. Image date from the C-arm should first be calibrated and corrected for image distortion. It is possible to isolate individual vertebral contours in noisy fluoroscope images using a Hough transform. It is preferred to use a method of "fuzzy templates and masks", whereby the search area for the vertebral boundary is limited to a logical region defined by the previous frame from the analysis. This method is used as a method for isolating individual markers and boundaries on RSA images of varying quality. An advantage of this method is the potential for an order of magnitude improvement in computation time. Individual vertebral boundaries derived from the video fluoroscopy images can be converted to a polar coordinate shape description.

The next step in data analysis is a search and match algorithm, to find the individual three-dimensional shape description in the library which best matches the shape description from the video fluoroscopy frame to reconstruct in step 55 the positions and objects visible in the scout views. Again, based on a priori knowledge of the previous frame's results and the limitations for possible motion extents in subsequent frames, the search boundaries can be substantially limited to improve speed. Matching of profiles will be evaluated using a cross-correlation.

Based on the derived knowledge of the position and rotation of each vertebra with reference to a global starting point, the relative motion of two adjacent vertebral bodies can be calculated in terms of the standard convention of three Euler rotations and three translations. This can be used for motion analysis 57, to determine treatment options 56, or simply to provide the updated data in step 58 probably before the patient is further moved at step 53, and the method is repeated.

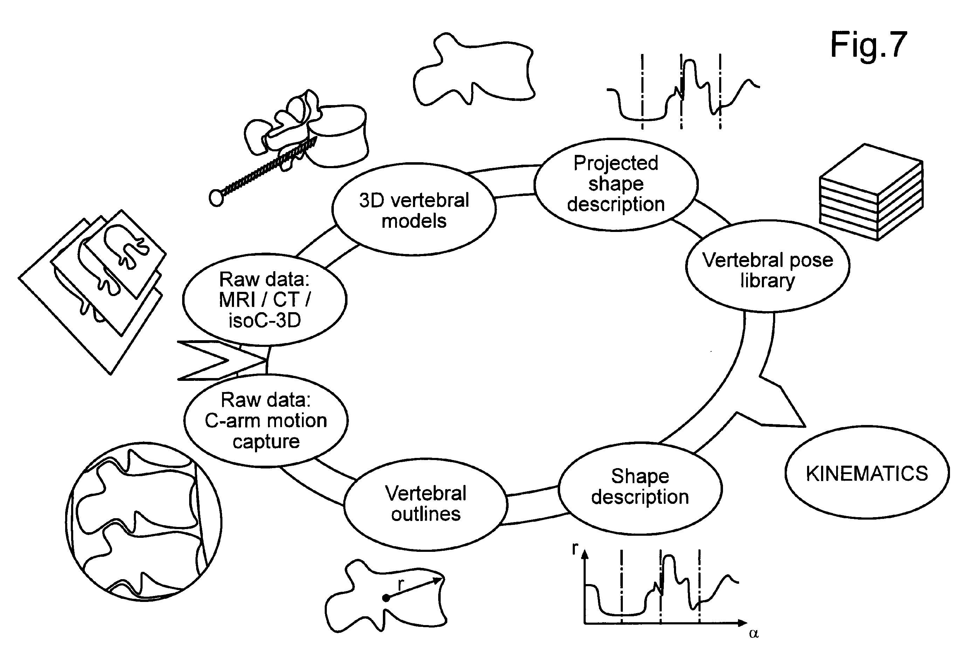

The full measurement protocol is illustrated schematically in Figure 7.

While the focus of the invention is on the determination of spine kinematics in vivo, it is also possible to adapt the invention for in vivo kinematic measurements of natural diarthrodial joints and prosthesis components, and monitoring of three-dimensional fracture fragment motion. In parallel to the technical development of the image analysis and kinematic algorithms, statistical methods based on Principal Component Analysis can be used for the comparison of multi-parameter motion waveforms to allow categorization of patient kinematic data into normal and pathological groups.

## Claims

1. Method to determine the motion or relative position or deformation of an object or of at least two elements (1, 2) comprising the steps of:
a) obtaining three-dimensional data of an object or elements (1, 2) in a first shape or first absolute or relative position;
b) moving at least one of the elements (1, 2) and/or deforming the object to have a second shape or second absolute or relative position ;
c) obtaining two-dimensional data of the object or elements (1, 2) having the second shape or second absolute or relative position; and
d) calculating the three-dimensional second shape or second absolute or relative position using the two-dimensional data obtained in step c) and the three-dimensional data obtained in step a).

2. Method to determine the motion or relative position or deformation of an object or of at least two elements (1, 2) comprising the steps of:
a) obtaining two-dimensional data of an object or elements (1, 2) in a first shape or first absolute or relative position;
b) moving at least one of the elements (1, 2) and/or deforming the object to have a second shape or second absolute or relative position ;
c) obtaining three-dimensional data of the object or elements (1,2) having the second shape or second absolute or relative position; and
d) calculating the three-dimensional first shape or first absolute or relative position using the three-dimensional data obtained in step c) and the two-dimensional data obtained in step a).

3. Method according to one of the previous claims, wherein the three-dimensional data is segmented to determine the shape and/or boundaries of elements (1, 2) in the data set.

4. Method according to one of the previous claims, wherein the three-dimensional data is obtained from a CT-scan or MR-scan, 3D fluoroscopy or 3D Ultrasound.

5. Method according to one of the previous claims, wherein the two-dimensional data is obtained from a scout view e.g. of an CT- or MR-scanner, from fluoroscopy or radiographs.

6. Method according to one of the previous claims, wherein the two-dimensional data is obtained using the same imaging modality used to obtain the three-dimensional data.

7. Method according to one of the previous claims, wherein a calibration of the used two-dimensional data is performed to obtain the projection parameters.

8. Method according to one of the previous claims, wherein the object or elements (1, 2) are deformed or moved by a deforming device (34), such as an inflatable cushion.

9. Computer program which, when loaded or running on a computer, performs or supports the method of one of the preceding claims.

10. Program storage medium or computer program product comprising the program of the previous claim.

11. Apparatus to determine the motion or relative position or deformation of an object or of at least two elements (1, 2) for generating data which can be used in motion analysis comprising: an apparatus (31) for generating three-dimensional data of an object or elements (1, 2), such as a CT-scanner, a MR-scanner, or data reading means to read previously recorded three-dimensional imaging data of an object or elements (1, 2); and an apparatus (31) for generating at least one two-dimensional image of the object or elements (1, 2), such as a CT-scanner or MR-scanner having the possibility to generates scout-views, a C-arc or a reading means to read data of at least one previously recorded two-dimensional image, wherein the apparatus for providing the three-dimensional data and the apparatus for providing the two-dimensional data are connected to a computer (27) or processor capable to perform the method of one of claims 1 to 8.

12. Apparatus according to the previous claims comprising a position changing means (34) for changing the shape and/or position of an imaged object or elements (1, 2).
